# FASCICULE DE BREVET EUROPEEN

(11) **EP 3 626 539 B1**
(45) Date de publication et mention de la délivrance du brevet: **13.01.2021**
(21) Numéro de dépôt: 19197148.0
(22) Date de dépôt: 13.09.2019
(51) Int. Cl.: B60R 9/04

(54) **PIED DE FIXATION POUR DES BARRES DE TOIT POUR UN VÉHICULE AUTOMOBILE**
BEFESTIGUNGSFUSS FÜR DACHTRÄGER FÜR EIN KRAFTFAHRZEUG
FOOT ATTACHEMENT FOR ROOF BARS FOR A MOTOR VEHICLE

(30) Priorité: 19.09.2018 FR 1858454
(43) Date de publication de la demande: 25.03.2020
(73) Titulaire: NOVARES France, 92140 Clamart (FR)
(72) Inventeur: HUGUET, Guillaume, 01250 NIVIGNE ET SURAN (FR); MARTIN, Edith, 01250 CEYZERIAT (FR); NICOLETTI, Franciane, 01100 BELLIGNAT (FR); ASENSIO, Louis, 06500 MENTON (FR)
(74) Mandataire: Delorme, Nicolas

(56) Documents cités:
- CN-U- 202 782 955
- DE-A1-102015 116 701
- DE-U1- 20 206 214
- DE-U1-202018 101 097
- GB-A- 2 517 736

## Description

La présente invention concerne un pied de fixation pour des barres de toit pour un véhicule automobile, ainsi qu'un véhicule automobile équipé dudit pied de fixation.

Pour augmenter la capacité de chargement d'un véhicule automobile, il est connu d'équiper le toit du véhicule de pieds de fixation pour des barres de toit. Lesdits pieds de fixation sont en principe disposés sur le toit du véhicule parallèlement à la direction de déplacement du véhicule et servent de support à des barres de toit, positionnées transversalement à la direction de déplacement du véhicule, sur lesquelles viennent se fixer les charges à transporter. De façon générale, les pieds de fixation pour barres de toit actuellement sur le marché ne sont utilisés que dans cette fonction de portage d'appoint pour le véhicule et ne sont pas configurés pour apporter d'autres fonctionnalités à l'utilisateur.

CN 202 782 955 U divulgue un pied de fixation pour des barres de toit pour un véhicule automobile comprenant : - un capot inférieur destiné à être fixé sur un toit de véhicule; - un capot supérieur fixé sur le capot inférieur; - au moins une source lumineuse apte à émettre un faisceau lumineux; - la source lumineuse est fixée sur le capot inférieur de telle manière qu'elle soit en contact avec au moins un élément conducteur de chaleur apte à diffuser vers l'extérieur la chaleur produite par la source lumineuse durant son fonctionnement.

Par ailleurs, il est connu d'utiliser les feux arrière ou avant du véhicule pour faciliter la localisation du véhicule, notamment lorsque le véhicule est en stationnement dans un parking et que le conducteur souhaite retrouver facilement son emplacement. Il peut ainsi déclencher à distance, notamment au moyen de la clé de contact, l'actionnement des feux arrière ou avant, lesquels se mettent à clignoter, ce qui permet au conducteur de repérer son véhicule dans le parking. Cette utilisation des feux comme moyens de localisation du véhicule présente toutefois l'inconvénient d'être insatisfaisante du fait de la position relativement basse des feux qui ne permet pas une vision de loin, notamment dans le cas où les feux sont cachés par un autre véhicule. En outre, il faut également constater que les feux d'un véhicule ne sont pas adaptés pour offrir à l'utilisateur d'autres fonctionnalités autres que la localisation du véhicule. En particulier, les feux d'un véhicule ne transmettent en général qu'un message lumineux binaire, correspondant à leur état allumé et éteint. De ce fait, lorsque l'utilisateur souhaite qu'un message lumineux plus complexe soit transmis par le véhicule, il doit en général équiper son véhicule de moyens d'éclairage spécifiques additionnels. Ce cas peut par exemple se présenter dans le domaine de la location de voitures, pour lequel il peut être utile que les voitures disponibles à la location dans un parc de voiture soient facilement identifiables par un futur utilisateur, ou lors d'une utilisation courante du véhicule, pour laquelle il peut être utile de communiquer avec les autres usagers de la route au moyen de messages lumineux. On peut citer comme exemple le cas d'un véhicule autonome qui peut communiquer avec l'environnement extérieur au moyen d'une lumière verte, ladite lumière verte servant à informer les piétons de la prise en compte de leur présence ou pour leur indiquer qu'ils peuvent traverser la chaussée sans danger. Les solutions actuellement disponibles sur le marché présentent plusieurs inconvénients. D'une part, elles nécessitent un montage d'éléments d'éclairage spécifiques sur le véhicule. Ce montage peut s'avérer complexe à réaliser et l'aspect extérieur du véhicule peut s'en trouver amoindrie. D'autre part, les sources lumineuses utilisées dans ces éléments d'éclairage spécifiques dégageant une chaleur importante, l'utilisateur peut se brûler en essayant de déplacer lesdits éléments d'éclairage.

La présente invention vise donc à proposer une solution au problème de la localisation d'un véhicule automobile qui permet également au véhicule de communiquer de manière visuelle avec l'environnement extérieur et qui ne présente pas les inconvénients des solutions connues de l'art antérieur.

Selon un premier aspect, l'invention concerne un pied de fixation pour des barres de toit pour un véhicule automobile comprenant :
- un capot inférieur destiné à être fixé sur un toit de véhicule ;
- un capot supérieur fixé sur le capot inférieur ;
- au moins une source lumineuse apte à émettre un faisceau lumineux;
- au moins un guide de lumière à l'intérieur duquel se propage le faisceau lumineux, ledit guide de lumière étant logé au moins partiellement à l'intérieur d'un canal périphérique formé dans le capot inférieur et/ou supérieur ;
caractérisé en ce que la source lumineuse est fixée sur le capot inférieur de telle manière qu'elle soit en contact avec au moins un élément conducteur de chaleur apte à diffuser vers l'extérieur la chaleur produite par la source lumineuse durant son fonctionnement.

Ainsi configuré, le pied de fixation pour barres de toit de l'invention pourra à la fois transmettre un message lumineux vers l'extérieur par l'intermédiaire de la source lumineuse et du guide lumière, et permettre à la chaleur dégagée par la source lumineuse de s'évacuer vers l'extérieur via le capot inférieur. Du fait la position élevée du pied de fixation, ce message lumineux pourra ainsi être visible de loin et à 360°, sans être gêné par les véhicules environnants. Par ailleurs, en choisissant de manière adéquate la source lumineuse et/ou le guide de lumière, il sera possible de transmettre un message lumineux complexe qui offrira à l'utilisateur d'autres fonctionnalités en complément d'une simple localisation du véhicule. Finalement, du fait de l'intégration de la source lumineuse et du guide de lumière dans le pied de fixation, le travail de montage s'en trouvera grandement simplifié.

Le pied de fixation pour barres de toit de l'invention peut également comprendre les caractéristiques suivantes prises de manière isolée ou combinée :
- le pied de fixation comprend de plus un élément de protection entourant au moins partiellement le guide de lumière, ledit élément de protection étant conformé pour définir au moins un élément d'assemblage apte à fixer le guide de lumière sur le capot inférieur.
- l'élément de protection possède une première partie sensiblement tubulaire à l'intérieur de laquelle est logé le guide de lumière et une deuxième partie venue de matière avec la première partie, ladite deuxième partie définissant au moins un élément d'assemblage apte à fixer le guide de lumière sur le capot inférieur.
- l'élément d'assemblage est un clip.
- l'élément d'assemblage est un harpon.
- l'élément conducteur de chaleur comprend au moins une partie du capot inférieur qui est en contact avec la source lumineuse.
- la partie du capot inférieur qui est en contact avec la source lumineuse est formée dans un matériau polyamide, de préférence polyamide 6, renforcée de fibres de verre ou de fibres minérales, de préférence à 40 %, et/ou de fibres de carbone, de préférence à 30 %.
- la partie du capot inférieur qui est en contact avec la source lumineuse est formée dans un matériau polyétheréthercétone renforcée de fibres de carbone, de préférence à 30 %.
- l'élément conducteur de chaleur comprend au moins une couche de matériau composite composé d'une matrice métallique d'aluminium renforcé de particules de carbure de silicium, ladite couche étant déposée sur une face interne du capot inférieur.
- le capot inférieur comporte une série de nervures disposées de manière parallèle, lesdites nervures permettant d'évacuer de manière plus efficace la chaleur produite par la source lumineuse durant son fonctionnement.
- la source lumineuse est constituée de diodes électroluminescentes.
- le guide lumière est constituée d'une ou plusieurs fibres optiques.
- le capot supérieur est fixé sur la capot inférieur par soudure.
- le capot inférieur est formé par un procédé de surmoulage bi-matière.

Selon un deuxième aspect, l'invention concerne un véhicule automobile équipé d'au moins un pied de fixation pour barres de toit telle que décrit précédemment.

Selon une configuration avantageuse, le véhicule automobile de l'invention sera équipé d'au moins une barre de toit, ladite barre de toit étant fixée, notamment par vissage, sur le pied de fixation.

D'autres caractéristiques et avantages de la présente invention ressortiront clairement de la description détaillée ci-après de plusieurs modes de réalisation d'un pied de fixation pour barres de toit selon l'invention, donnés à titre d'exemples non limitatifs, en référence aux dessins ci-annexés, dans lesquels :
- la figure 1 est une vue en perspective d'un pied de fixation pour barres de toit selon une première configuration de l'invention ;
- la figure 2 est une vue en perspective éclatée du pied de fixation représenté sur la figure 1 ;
- la figure 3 est une vue en perspective d'une variante de réalisation d'un capot inférieur du pied de fixation représenté sur la figure 1 ;
- la figure 4 est une vue en coupe selon le plan P1 du pied de fixation représenté sur la figure 1 ;
- la figure 5 est une vue en coupe selon le plan P2 du pied de fixation représenté sur la figure 1 ;
- la figure 6 est une vue similaire à la figure 5, mais selon une deuxième configuration de l'invention ;
- la figure 7 est une vue similaire à la figure 5, mais selon une troisième configuration de l'invention ;
- la figure 8 est une vue similaire à la figure 5, mais selon une quatrième configuration de l'invention ;
- la figure 9 est une vue partielle en perspective d'un véhicule automobile équipé de pieds de fixation conformes à celui représenté sur la figure 1.

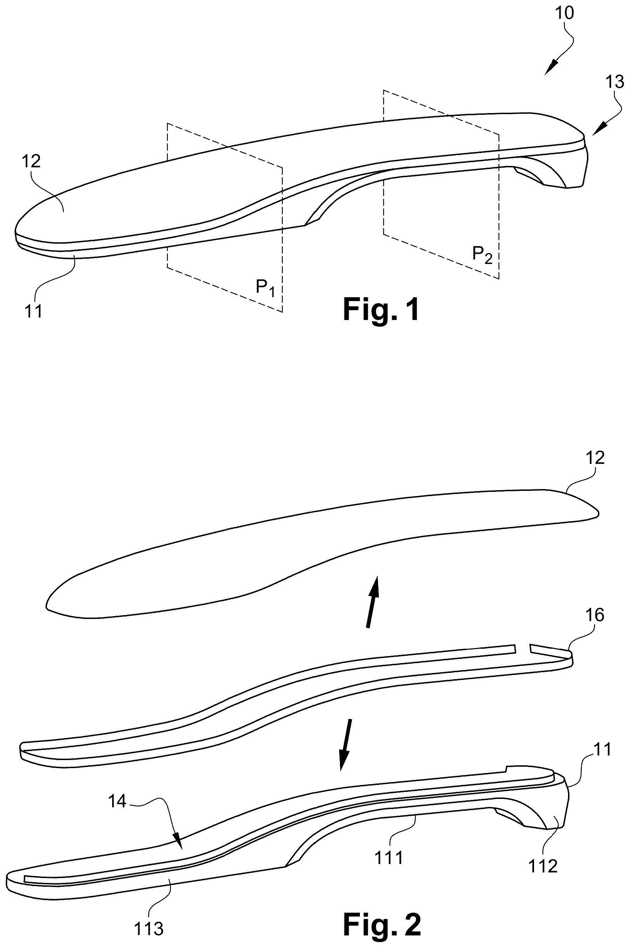

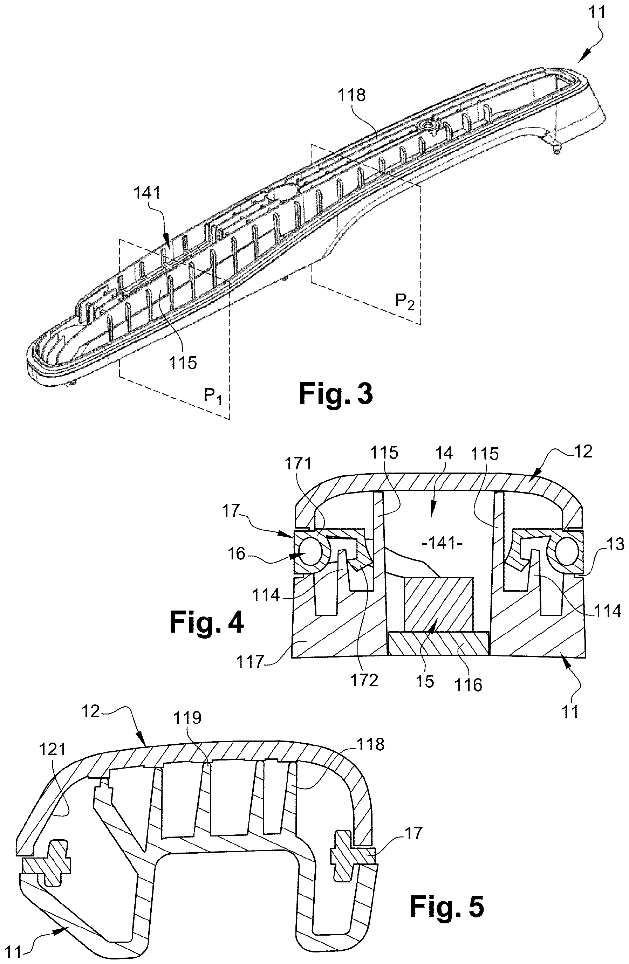

En se référant tout d'abord aux figures 1 et 2, le pied de fixation pour barres de toit 10 de l'invention comprend deux sous-parties 11 et 12 assemblées ensemble. Une première sous-partie 11, dénommée par la suite capot inférieur 11, est destinée à être fixée sur le toit d'un véhicule. Le capot inférieur 11 comporte un tronçon central 111 prolongé à ses deux extrémités par des pieds 112 et 113, au moins l'un des pieds 112 et 113 étant destiné à être fixé de manière rigide sur le toit d'un véhicule. Le tronçon central 111 est configuré de telle manière à former une arche, sur laquelle une barre transversale (non représentée) pourra être fixée soit par serrage, soit par vissage. La deuxième sous-partie 12, dénommée par la suite capot supérieur 12, vient se fixer sur le capot inférieur 11 soit par clipsage ou collage, soit, comme expliqué plus en détail par la suite, par soudure. Les capots inférieur et supérieur 11, 12 seront préférentiellement formés en matériau thermoplastique. Les capots inférieur et supérieur 11, 12 sont en outre configurés pour, une fois assemblés, définir un canal périphérique 13, affleurant à la surface externe du pied de fixation 10, et un compartiment interne 14, délimité par les parois internes des capots inférieur et supérieur 11, 12. Comme illustré sur la figure 4, le compartiment interne 14 constitue un espace libre permettant de loger au moins une source lumineuse 15. La source lumineuse 15 est configurée pour émettre un faisceau lumineux. Ce faisceau lumineux est ensuite propagé à travers un guide de lumière 16 dont une extrémité est reliée à la source lumineuse 15. La source lumineuse 15 pourra avantageusement être constituée de diodes électroluminescentes, appelées couramment LED. Le guide de lumière 16 pourra avantageusement être en forme de tige souple de manière à pouvoir se courber et épouser ainsi la forme du canal périphérique 13. Il peut ainsi être logé au moins partiellement à l'intérieur dudit canal périphérique 13. Le guide de lumière 16 est fabriqué dans un matériau transparent ou translucide de manière à laisser passer la lumière, et, dans une forme avantageuse, est constitué d'une ou plusieurs fibres optiques. De manière à protéger le guide de lumière 16 des agressions extérieures, la partie de celui-ci qui est logée dans le canal périphérique 13 est entourée d'un élément de protection 17. Cet élément de protection 17 pourra avantageusement être co-extrudé ou surmoulé avec le guide de lumière 16. De manière à laisser passer la lumière, il est fabriqué dans un matériau transparent ou translucide. Comme représenté sur la figure 4, l'élément de protection 17 possède une première partie 171 sensiblement tubulaire à l'intérieur de laquelle est logé le guide de lumière 16 et une deuxième partie 172 venue de matière avec la première partie 171, ladite deuxième partie 172 définissant au moins un élément d'assemblage apte à fixer le guide de lumière 16 sur le capot inférieur 11. Dans la configuration représentée, cette deuxième partie 172 possède une forme de harpon, ledit harpon venant se caler entre deux parois verticales adjacentes 114, 115 du capot inférieur 11. D'autres formes possibles pourront être envisagées pour cette deuxième partie 172. En particulier, elle pourra posséder une forme de clip.

Dans la configuration représentée sur la figure 4, la source lumineuse 15 est directement fixée sur une surface interne 116 du capot inférieur 11 par tout moyen de fixation envisageable. De ce fait, la chaleur dégagée par la source lumineuse 15 durant son fonctionnement est directement transmise au capot inférieur 11. Cette chaleur emmagasinée par le capot inférieur 11 est ensuite diffusée à l'extérieur soit dans l'air ambiant au niveau des parois latérales 117 du capot inférieur 11, soit dans la carrosserie du véhicule au niveau des pieds 112 et 113 qui sont fixés sur le toit du véhicule. Cette diffusion de chaleur est d'autant plus importante que le matériau constitutif du capot inférieur 11 possède une conductivité thermique importante. En particulier, il sera avantageux de former le capot inférieur 11 par injection dans un moule d'un matériau en polyamide, de préférence polyamide 6, renforcée de fibres de verre ou de fibres minérales, de préférence à 40 %, et/ou de fibres de carbone, de préférence à 30 %. Ce type de matériau possède une conductivité thermique comprise entre 0,2 et 0,5 Watt par mètre-Kelvin (W·m⁻¹·K⁻¹). Un autre matériau envisageable pour former le capot inférieur 11 pourra être du polyétheréthercétone renforcée de fibres de carbone, de préférence à 30 %. Ce type de matériau possède une conductivité thermique comprise entre 0,8 et 1 Watt par mètre-Kelvin (W·m⁻¹·K⁻¹). Dans ce cas, étant donné la forte conductivité thermique du matériau constitutif du capot inférieur 11, une liaison par soudure du capot supérieur 12 sur le capot inférieur 11 sera difficilement réalisable. Une liaison par clipsage ou collage des capots inférieur et supérieur 11, 12 sera donc privilégiée.

En référence à la figure 3, il est représenté une variante de réalisation avantageuse du capot inférieur 11. Dans cette variante, la capot inférieur 11 est muni de nervures 118 disposées de manière parallèle à l'intérieur du compartiment interne 14, lesdites nervures 118 s'étendant sur pratiquement toute la longueur du capot inférieur 11, hormi à l'intérieur d'une portion 141 du compartement interne 14. Ces nervures 118 sont configurées pour permettre une évacuation plus efficace de la chaleur produite par la source lumineuse 15 durant son fonctionnement. Comme représenté sur la figure 4, la portion 141 est bordée de chaque côté par les parois 115 s'étendant perpendiculairement à la surface interne 116. Cette portion 141 sert de logement pour la source lumineuse 15.

En référence aux figures 5 à 8, il est représenté plusieurs modes de réalisation particuliers du pied de fixation pour barres de toit 10 selon l'invention. Tous ces modes de réalisation ont en commun de comporter un capot inférieur 11 muni de nervures 118. Ils diffèrent en revanche soit par certains détails de structure, soit par le ou les matériaux constitutifs du capot inférieur 11.

Dans la configuration représentée sur la figure 5, le capot inférieur 11 et le capot supérieur 12 sont tous deux formés entièrement dans un matériau du type polyamide 6 renforcé à 40 % en fibres de verre. Ils sont soudés ensemble, notamment au niveau des extrémités 119 des nervures 118 qui, lorsque les deux capots sont assemblés ensemble, entrent en contact avec la face interne 121 du capot supérieur 12.

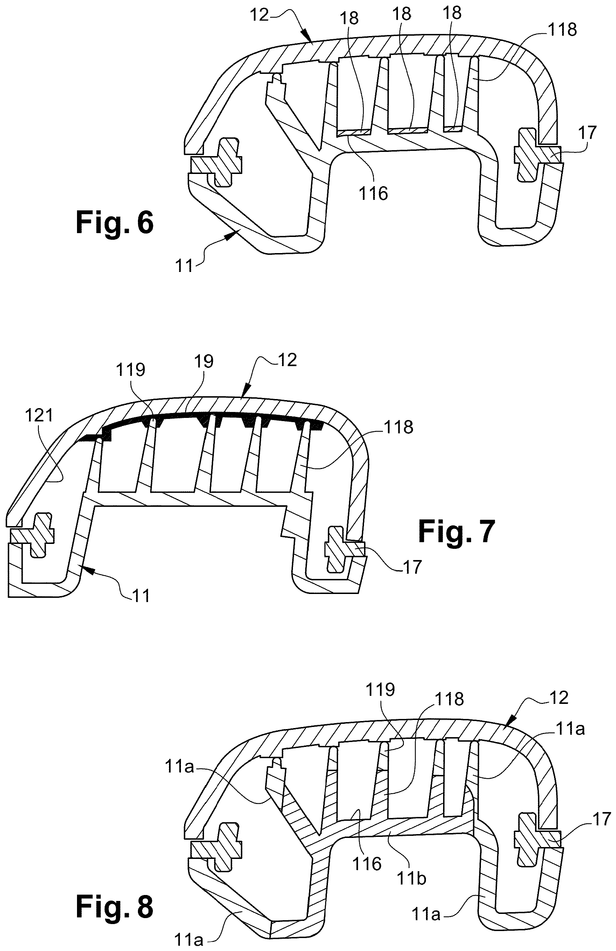

La configuration représentée sur la figure 6 différe de celle de la figure 5 par le fait que la source lumineuse 15 n'est pas directement fixée sur le capot inférieur 11. En effet, dans la configuration représentée sur la figure 5, et comme illustré sur la figure 4, la source lumineuse 15 repose directement sur une face interne 116 du capot inférieur 11. Dans la configuration de la figure 6, cette face interne 116 est préalablement recouverte par une couche 18 de matériau composite composé d'une matrice métallique d'aluminium renforcé de particules de carbure de silicium avant de fixer la source lumineuse 15. Cette couche 18 de matériau composite possède une conductivité thermique supérieure à celle du matériau constitutif du capot inférieur 11, et, en particulier, une conductivité thermique de 180 Watt par mètre-Kelvin (W·m⁻¹·K⁻¹). Cette configuration permet donc d'évacuer plus rapidement la chaleur dégagée par la source lumineuse 15.

La configuration représentée sur la figure 7 diffère de celle de la figure 5 par le fait que le capot inférieur 11 est formé entièrement dans un matériau polyétheréthercétone renforcée à 30 % fibres de carbone. Ce matériau possède une conductivité thermique très supérieure à celle du matériau polyamide 6 renforcé à 40 % en fibres de verre ou en fibres minérales utilisé dans la configuration de la figure 5, et, en particulier, une conductivité thermique de 250 Watt par mètre-Kelvin (W·m-¹·K⁻¹). Cette configuration permet donc d'évacuer plus rapidement la chaleur dégagée par la source lumineuse 15. La très haute conductivité thermique du matériau utilisé pour former le capot inférieur 11 ne permet toutefois pas une liaison par soudure des capots inférieur et supérieur 11, 12. Il faut donc utiliser un autre mode d'assemblage dans cette configuration. Dans la configuration représentée, les capots inférieur et supérieur 11, 12 sont notamment reliés au moyen d'une couche de colle 19 qui vient recouvrir à la fois une partie de la surface interne 121 du capot supérieur 12 et les extrémités 119 des nervures 118 du capot inférieur 11.

La configuration représentée sur la figure 8 diffère de celle de la figure 5 par le fait que le capot inférieur 11 comprend des premières parties 11a formées dans un matériau polyamide 6 renforcé à 40 % en fibres de verre et des secondes parties 11b formées dans un matériau polyétheréthercétone renforcée à 30 % fibres de carbone. Les premières parties 11a pourront avantageusement correspondre aux parties destinées à entrer en contact avec le capot supérieur 12, en particulier les extrémités 119 des nervures 118, de telle sorte qu'une liaison par soudure des capots inférieur et supérieur 11, 12 peut être envisagéee dans ce cas. Les secondes parties 11b pourront avantageusement correspondre aux parties jouxtant la source lumineuse 15, en particulier la surface interne 116, de telle sorte que la chaleur dégagée par la source lumineuse 15 soit évacuée plus efficacement vers l'extérieur. Cette configuration pourra être obtenue par surmoulage bi-matière des premières parties 11a et des secondes parties 11b.

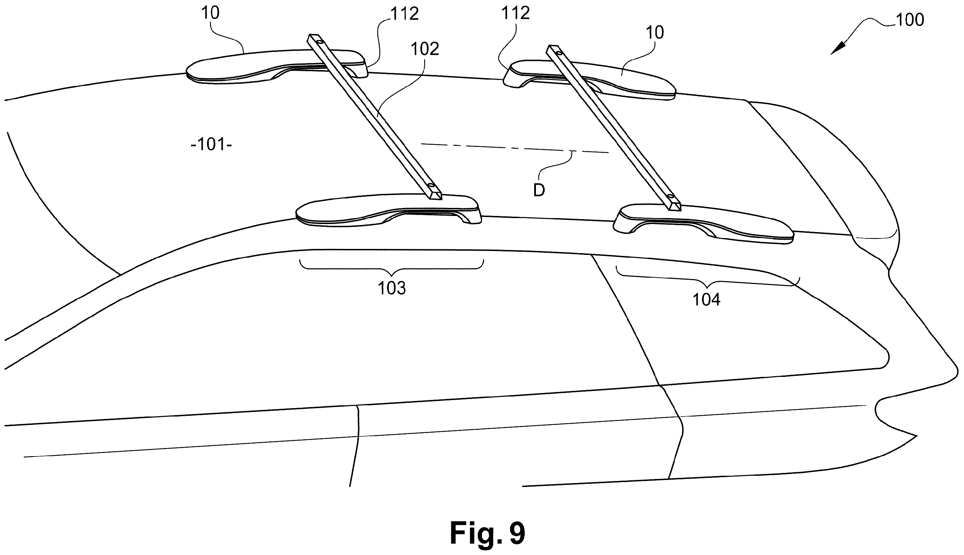

En référence à la figure 9, il est représenté un véhicule automobile 100 équipé de deux paires 103, 104 de pieds de fixation 10, chacun des pieds de fixation 10 étant conforme à celui représenté sur la figure 1. Les pieds de fixation 10 sont fixés sur le toit 101 du véhicule 100 de telle sorte à être disposés parallèlement à la direction de déplacement D du véhicule 100. Chacune des paires 103, 104 sert de support à une barre de toit 102 positionnée transversalement à la direction de déplacement D et fixée sur les pieds de fixation 10 au moyen de vis. Il est avantageux de disposer les pieds de fixation 10 de la première paire 103 de telle sorte que le pied 112 du capot inférieur soit dirigé vers l'arrière du véhicule 100. A l'inverse, les pieds de fixation 10 de la deuxième paire 104 sont disposés de telle sorte que le pied 112 du capot inférieur soit dirigé vers l'avant du véhicule 100.

Bien entendu, l'invention n'est pas limitée aux modes de réalisation décrits ci-dessus à titre d'exemples non limitatifs. Des modifications restent possibles, notamment du point de vue de la structure des divers éléments ou du type de matériaux utilisés, sans sortir pour autant du domaine de protection de l'invention.

## Revendications

1. Pied de fixation (10) pour des barres de toit (102) pour un véhicule automobile (100) comprenant :
- un capot inférieur (11) destiné à être fixé sur un toit de véhicule ;
- un capot supérieur (12) fixé sur le capot inférieur (11);
- au moins une source lumineuse (15) apte à émettre un faisceau lumineux);
- au moins un guide de lumière (16) à l'intérieur duquel se propage le faisceau lumineux, ledit guide de lumière (16) étant logé au moins partiellement à l'intérieur d'un canal périphérique (13) formé dans le capot inférieur (11) et/ou supérieur (12);
**caractérisé en ce que** la source lumineuse (15) est fixée sur le capot inférieur (11) de telle manière qu'elle soit en contact avec au moins un élément conducteur de chaleur (116, 18) apte à diffuser vers l'extérieur la chaleur produite par la source lumineuse (15) durant son fonctionnement.

2. Pied de fixation (10) selon la revendication 1, **caractérisé en ce qu'**il comprend de plus un élément de protection (17) entourant au moins partiellement le guide de lumière (16), ledit élément de protection (17) étant conformé pour définir au moins un élément d'assemblage apte à fixer le guide de lumière (16) sur le capot inférieur (11).

3. Pied de fixation (10) selon la revendication 2, **caractérisé en ce que** l'élément de protection (17) possède une première partie (171) sensiblement tubulaire à l'intérieur de laquelle est logé le guide de lumière (16) et une deuxième partie (172) venue de matière avec la première partie (171), ladite deuxième partie (172) définissant au moins un élément d'assemblage apte à fixer le guide de lumière (16) sur le capot inférieur (11).

4. Pied de fixation (10) selon la revendication 2 ou 3, **caractérisé en ce que** l'élément d'assemblage est un clip.

5. Pied de fixation (10) selon la revendication 2 ou 3, **caractérisé en ce que** l'élément d'assemblage est un harpon.

6. Pied de fixation (10) selon l'une des revendications 1 à 5, **caractérisé en ce que** l'élément conducteur de chaleur comprend au moins une partie (116) du capot inférieur (11) qui est en contact avec la source lumineuse (15).

7. Pied de fixation (10) selon la revendication 6, **caractérisé en ce que** la partie (116) du capot inférieur (11) qui est en contact avec la source lumineuse (15) est formée dans un matériau polyamide, de préférence polyamide 6, renforcée de fibres de verre ou de fibres minérales, de préférence à 40 %, et/ou de fibres de carbone, de préférence à 30 %.

8. Pied de fixation (10) selon la revendication 6, **caractérisé en ce que** la partie (116) du capot inférieur (11) qui est en contact avec la source lumineuse (15) est formée dans un matériau polyétheréthercétone renforcée de fibres de carbone, de préférence à 30 %.

9. Pied de fixation (10) selon l'une des revendications 1 à 5, **caractérisé en ce que** l'élément conducteur de chaleur comprend au moins une couche (18) de matériau composite composé d'une matrice métallique d'aluminium renforcé de particules de carbure de silicium, ladite couche (18) étant déposée sur une face interne (116) du capot inférieur (11).

10. Pied de fixation (10) selon l'une des revendications 1 à 9, **caractérisé en ce que** le capot inférieur (11) comporte une série de nervures (118) disposées de manière parallèle, lesdites nervures (118) permettant d'évacuer de manière plus efficace la chaleur produite par la source lumineuse (15) durant son fonctionnement.

11. Pied de fixation (10) selon l'une des revendications 1 à 10, **caractérisé en ce que** la source lumineuse (15) est constituée de diodes électroluminescentes.

12. Pied de fixation (10) selon l'une des revendications 1 à 11, **caractérisé en ce que** le guide lumière (16) est constituée d'une ou plusieurs fibres optiques.

13. Pied de fixation (10) selon l'une des revendications 1 à 12, **caractérisé en ce que** le capot supérieur (12) est fixé sur la capot inférieur (11) par soudure.

14. Pied de fixation (10) selon l'une des revendications 1 à 13, **caractérisé en ce que** le capot inférieur (11) est formé par un procédé de surmoulage bi-matière.

15. Véhicule automobile (100) équipé d'au moins un pied de fixation (10) selon l'une des revendications 1 à 14.

16. Véhicule automobile (100) selon la revendication 15, équipé d'au moins une barre de toit (102), ladite barre de toit (102) étant fixée, notamment par vissage, sur le pied de fixation (10).

## Patentansprüche

1. Befestigungsfuß (10) für Dachlastenträger (102) für ein Kraftfahrzeug (100), umfassend:
- eine untere Abdeckung (11), die dazu bestimmt ist, auf einem Fahrzeugdach befestigt zu werden;
- eine obere Abdeckung (12), die auf der unteren Abdeckung (11) befestigt ist;
- mindestens eine Leuchtquelle (15), die imstande ist, einen Lichtstrahl auszugeben;
- mindestens einen Lichtleiter (16) in dessen Inneren sich der Lichtstrahl ausbreitet, wobei der Lichtleiter (16) mindestens teilweise im Inneren eines umlaufenden Kanals (13) aufgenommen ist, der in der unteren (11) und/oder oberen (12) Abdeckung gebildet ist;
**dadurch gekennzeichnet, dass** die Leuchtquelle (15) derart an der unteren Abdeckung (11) befestigt ist, dass sie in Kontakt mit mindestens einem Wärmeleiterelement (116, 18) ist, der imstande ist, die durch die Leuchtquelle (15) während ihres Betriebs erzeugte Wärme nach außen zu diffundieren.

2. Befestigungsfuß (10) nach Anspruch 1, **dadurch gekennzeichnet, dass** er weiter ein Schutzelement (17) umfasst, das den Lichtleiter (16) mindestens teilweise umgibt, wobei das Schutzelement (17) angepasst ist, um mindestens ein Montageelement zu definieren, das imstande ist, den Lichtleiter (16) auf der unteren Abdeckung (11) zu befestigen.

3. Befestigungsfuß (10) nach Anspruch 2, **dadurch gekennzeichnet, dass** das Schutzelement (17) einen ersten, im Wesentlichen rohrförmigen Teil (171) besitzt, in dessen Inneren der Lichtleiter (16) aufgenommen ist, und einen zweiten Teil (172), materialeinheitlich mit dem ersten Teil (171), wobei der zweite Teil (172) mindestens ein Montageelement definiert, das imstande ist, den Lichtleiter (16) an der unteren Abdeckung (11) zu befestigen.

4. Befestigungsfuß (10) nach Anspruch 2 oder 3, **dadurch gekennzeichnet, dass** das Montageelement ein Clip ist.

5. Befestigungsfuß (10) nach Anspruch 2 oder 3, **dadurch gekennzeichnet, dass** das Montageelement eine Harpune ist.

6. Befestigungsfuß (10) nach einem der Ansprüche 1 bis 5, **dadurch gekennzeichnet, dass** das Wärmleiterelement mindestens einen Teil (116) der unteren Abdeckung (11) umfasst, der in Kontakt mit der Leuchtquelle (15) ist.

7. Befestigungsfuß (10) nach Anspruch 6, **dadurch gekennzeichnet, dass** der Teil (116) der unteren Abdeckung (11), der in Kontakt mit der Leuchtquelle (15) ist, aus einem Polyamid-Material, vorzugsweise Polyamid 6 gebildet ist, welches mit Glasfasern oder Mineralfasern, vorzugsweise zu 40 %, und/oder mit Karbonfasern, vorzugsweise zu 30 % verstärkt ist.

8. Befestigungsfuß (10) nach Anspruch 6, **dadurch gekennzeichnet, dass** der Teil (116) der unteren Abdeckung (11), der in Kontakt mit der Leuchtquelle (15) ist, aus einem Polyetheretherketon-Material gebildet ist, welches mit Karbonfasern, vorzugsweise zu 30 % verstärkt ist.

9. Befestigungsfuß (10) nach einem der Ansprüche 1 bis 5, **dadurch gekennzeichnet, dass** das Wärmeleiterelement mindestens eine Schicht (18) aus Verbundmaterial umfasst, das aus einer Metallmatrix aus mit Partikeln aus Siliziumkarbid verstärktem Aluminium besteht, wobei die Schicht (18) auf einer Innenseite (116) der unteren Abdeckung (11) abgeschieden ist.

10. Befestigungsfuß (10) nach einem der Ansprüche 1 bis 9, **dadurch gekennzeichnet, dass** die untere Abdeckung (11) eine Reihe von Rippen (118) beinhaltet, die parallel angeordnet sind, wobei es die Rippen (118) ermöglichen, die durch die Leuchtquelle (15) während ihres Betriebs erzeugte Wärme wirksamer auszubringen.

11. Befestigungsfuß (10) nach einem der Ansprüche 1 bis 10, **dadurch gekennzeichnet, dass** die Leuchtquelle (15) aus Leuchtdioden gebildet ist.

12. Befestigungsfuß (10) nach einem der Ansprüche 1 bis 11, **dadurch gekennzeichnet, dass** der Lichtleiter (16) aus einem oder mehreren Lichtwellenleitern gebildet ist.

13. Befestigungsfuß (10) nach einem der Ansprüche 1 bis 12, **dadurch gekennzeichnet, dass** die obere Abdeckung (12) durch Schweißen auf der unteren Abdeckung (11) befestigt ist.

14. Befestigungsfuß (10) nach einem der Ansprüche 1 bis 13, **dadurch gekennzeichnet, dass** die untere Abdeckung (11) durch ein Zweimaterial-Abformverfahren gebildet ist.

15. Kraftfahrzeug (100), das mit mindestens einem Befestigungsfuß (10) nach einem der Ansprüche 1 bis 14 ausgestattet ist.

16. Kraftfahrzeug (100) nach Anspruch 15, das mit mindestens einem Dachlastenträger (102) ausgestattet ist, wobei der Dachlastenträger (102) insbesondere durch Verschrauben an dem Befestigungsfuß (10) befestigt ist.

## Claims

1. A fastening foot (10) for roof bars (102) for a motor vehicle (100) comprising:
- a lower hood (11) intended to be fastened on a vehicle roof;
- an upper hood (12) fastened on the lower hood (11);
- at least one light source (15) capable of emitting a light beam;
- at least one light guide (16) within which the light beam propagates, said light guide (16) being housed at least partially inside a peripheral channel (13) formed in the lower (11) and/or upper (12) hood(s);
**characterized in that** the light source (15) is fastened on the lower hood (11) so that it is in contact with at least one heat conducting element (116, 18) capable of diffusing the heat, which is produced by the light source (15) during the operation thereof, to the outside

2. The fastening foot (10) according to claim 1, **characterized in that** it further comprises a protective element (17) which is at least partially surrounding the light guide (16), said protective element (17) being shaped to define at least one assembly element capable of fastening the light guide (16) on the lower hood (11).

3. The fastening foot (10) according to claim 2, **characterized in that** the protective element (17) has a first substantially tubular portion (171) inside which the light guide (16) is housed and a second portion (172) integral with the first portion (171), said second portion (172) defining at least one assembly element capable of fastening the light guide (16) on the lower hood (11).

4. The fastening foot (10) according to claim 2 or 3, **characterized in that** the assembly element is a clip.

5. The fastening foot (10) according to claim 2 or 3, **characterized in that** the assembly element is a harpoon.

6. The fastening foot (10) according to any of claims 1 to 5, **characterized in that** the heat conducting element comprises at least one portion (116) of the lower hood (11) which is in contact with the light source (15).

7. The fastening foot (10) according to claim 6, **characterized in that** the portion (116) of the lower hood (11) which is in contact with the light source (15) is formed from a polyamide material, preferably polyamide 6, reinforced with glass fibers or mineral fibers, preferably 40%, and/or carbon fibers, preferably 30%.

8. The fastening foot (10) according to claim 6, **characterized in that** the portion (116) of the lower hood (11) which is in contact with the light source (15) is formed from a polyetheretherketone material reinforced with carbon fibers, preferably 30%.

9. The fastening foot (10) according to any of claims 1 to 5, **characterized in that** the heat conducting element comprises at least one layer (18) of composite material composed of a metal matrix of aluminum reinforced with particles of silicon carbide, said layer (18) being deposited on an inner face (116) of the lower hood (11).

10. The fastening foot (10) according to any of claims 1 to 9, **characterized in that** the lower hood (11) includes a series of ribs (118) which are disposed in parallel, said ribs (118) allowing discharging, more effectively, the heat which is produced by the light source (15) during the operation thereof.

11. The fastening foot (10) according to any of claims 1 to 10, **characterized in that** the light source (15) consists of light-emitting diodes.

12. The fastening foot (10) according to any of claims 1 to 11, **characterized in that** the light guide (16) consists of one or several optical fiber(s).

13. The fastening foot (10) according to any of claims 1 to 12, **characterized in that** the upper hood (12) is fastened on the lower hood (11) by welding.

14. The fastening foot (10) according to any of claims 1 to 13, **characterized in that** the lower hood (11) is formed by a bi-material overmolding method.

15. A motor vehicle (100) equipped with at least one fastening foot (10) according to any of claims 1 to 14.

16. The motor vehicle (100) according to claim 15, equipped with at least one roof bar (102), said roof bar (102) being fastened, in particular by screwing, on the fastening foot (10).
